# EUROPÄISCHE PATENTANMELDUNG

(11) **EP 1 371 681 A2**
(43) Veröffentlichungstag der Anmeldung: **17.12.2003**
(21) Anmeldenummer: 03009819.8
(22) Anmeldetag: 12.05.2003
(51) Int. Cl.: C08J 5/18, C08L 67/02

(54) **Biaxial orientierte, hydrolysebeständige Folie, Verfahren zu ihrer Herstellung und ihre Verwendung**

(30) Priorität: 21.05.2002 DE 10222348
(71) Anmelder: Mitsubishi Polyester Film GmbH, 65203 Wiesbaden (DE)
(72) Erfinder: Kliesch, Holger, Dr., 55252 Mainz (DE); Kiehne, Thorsten, Dr., 65185 Wiesbaden (DE); Hora, Franz, 65830 Kriftel (DE); Fischer, Ingo, 65558 Heistenbach (DE)
(74) Vertreter: Schweitzer, Klaus, Dr.

(57) **Zusammenfassung**

Die Erfindung betrifft eine biaxial orientierte, hydrolysebeständige Folie aus einem Thermoplasten, deren Dicke im Bereich von 0,5 bis 12 µm liegt. Die Folie enthält mindestens einen ausgasungsfesten Hydrolysestabilisator und zeichnet sich neben ihrer geringen Hydrolysegeschwindigkeit durch ihre guten dielektrischen Eigenschaften aus, insbesondere weist sie eine hohe Durchschlagfestigkeit auf. Der Hydrolysestabilisator neigt beim Erhitzen der Folie nur zu einer geringen Gasentwicklung. Die Erfindung betrifft ferner ein Verfahren zur Herstellung dieser Folie und ihre Verwendung, sowie aus der Folie hergestellte Kondensatoren.

## Beschreibung

Die Erfindung betrifft eine biaxial orientierte, hydrolysebeständige Folie aus einem Thermoplasten, deren Dicke im Bereich von 0,5 bis 12 µm liegt. Die Folie enthält mindestens einen ausgasungsfesten Hydrolysestabilisator und zeichnet sich neben ihrer geringen Hydrolysegeschwindigkeit durch ihre guten dielektrischen Eigenschaften aus, insbesondere weist sie eine hohe Durchschlagfestigkeit auf. Der Hydrolysestabilisator neigt beim Erhitzen der Folie nur zu einer geringen Gasentwicklung. Die Erfindung betrifft ferner ein Verfahren zur Herstellung dieser Folie und ihre Verwendung, sowie aus der Folie hergestellte Kondensatoren.

Folien aus Thermoplasten im angegebenen Dickenbereich, die sich zur Herstellung von Folienkondensatoren eignen, sind hinreichend bekannt.

Folien zur Herstellung von Kondensatoren müssen hohen Ansprüchen hinsichtlich ihrer elektrischen Durchschlagfestigkeit und ihrer dielektrischen Absorption genügen, um im Kondensator eine ausreichende Spannungsbelastbarkeit zu gewährleisten und um sich beim Lade- und Entladevorgang nur geringfügig zu erwärmen. Diese wird, wie u.a. in EP-A-0 791 633 beschrieben, durch eine hohe Reinheit der eingesetzten Rohstoffe gewährleistet. Daher ist es in der Regel notwendig, auf Additive zu verzichten (Ausnahmen bilden anorganisch mineralische Additive wie die in der Regel verwendeten SiO₂ - oder CaCO₃- Pigmente und Polymere mit sehr geringer Dielektrizitätskonstante wie Polystyrol u.ä.), um die elektrischen Eigenschaften nicht negativ zu beeinflussen.

In konventionellen Folienkondensatoren aus Thermoplasten kommen in der Regel Polyethylenterephthalat- oder Polyethylennaphthalat-Homopolymere zum Einsatz. Insbesondere Polyethylenterephthalat neigt aber bei Temperaturen oberhalb der Glastemperatur und insbesondere oberhalb von 100 °C zu hydrolytischem Abbau. Bei vielen Einsatzgebieten für Folienkondensatoren, beispielsweise im Automobilbereich, sind Temperaturen bis 130 °C und teilweise sogar darüber jedoch nicht selten. Durch den hydrolytischen Abbau werden die Folienlagen im Kondensator mit der Zeit brüchig und können so zum Versagen des Kondensators führen. Polyethylennaphthalat (PEN) ist zwar hydrolysebeständiger, hat aber einen deutlich höheren Preis und wird damit für die meisten Einsatzgebiete unwirtschaftlich und baut bei längerem Einsatz bei den genannten Temperaturen ebenfalls deutlich ab. Die Hydrolyseempfindlichkeit steigt in der Regel weiter an, wenn statt der Homopolymere Copolyester wie Polyethylenterephthalat (PET) mit Isophthalsäureanteil zum Einsatz kommen.

Hydrolysebeständigere Polyesterrohstoffe, die durch Verwendung von Carbodiimiden erhalten werden, sowie daraus hergestellte Fasern und Folien sind bekannt (US 5 885 709, EP 0 838 500, CH 621 135). Diese Rohstoffe und Folien erfüllen jedoch nicht die für Kondensatorfolien notwendigen Anforderungen an die dielektrischen und Verarbeitungseigenschaften.

Hydrolysebeständige Kondensatorfolien und daraus hergestellte Kondensatoren sind in den unveröffentlichten DE-Anmeldungen 102 09 847.6 und 102 09 850.6 beschrieben. Die aus den beschriebenen Folien hergestellten Kondensatoren zeigen ein gegenüber normalen PET-Folienkondensatoren verbessertes Langzeitverhalten. Die Ausbeute in der Kondensatorherstellung unterliegt jedoch insbesondere bei der Kapazitätsdrift delta C/C unerklärlichen Schwankungen, und es kommt zu gelegentlichen Ausfällen aufgrund dieser Eigenschaft bei Temperaturschocks, wie sie zum Beispiel bei SMD-Lötprozessen (Surface-Mounting-Device) auftreten.

Bei Erwärmung der Folien beziehungsweise der daraus hergestellten Kondensatoren kann es zu einer Geruchsbelästigung durch Ausgasung des Hydrolyseschutzmittels kommen.

Ferner weisen die in den beiden Anmeldungen beschriebenen Schichtkondensatoren in der Schnittfläche vermehrt Spalten auf, die zwar das elektrische Verhalten der Kondensatoren nicht zu beeinträchtigen scheinen, aber beim Weiterverarbeiter zu Irritationen und Reklamationen führen.

Hydrolysestabilisatoren mit geringer Geruchsbelästigung, z.B. Blockcopolymere auf Basis von Polycarbodiimiden, sind aus der DE 100 15 658 A1 bekannt. Die Schrift führt jedoch keine damit versetzten Folien beziehungsweise aus diesen hergestellte Kondensatoren an.

Aufgabe der vorliegenden Erfindung ist es, die beschriebenen Nachteile des Standes der Technik zu vermeiden.

Gegenstand der Erfindung ist daher eine biaxial orientierte, hydrolysebeständige Folie, die als Hauptbestandteil einen Thermoplasten enthält und eine Dicke im Bereich von 0,5 bis 12,0 µm, vorzugsweise 1,2 bis 7,0 µm, aufweist, eine elektrische Durchschlagfestigkeit AC von > 190 kV/mm und eine Rauheit Rₐ von < 150 nm besitzt und die mindestens einen ausgasungsfesten Hydrolysestabilisator enthält. Die Erfindung betrifft ferner ein Verfahren zur Herstellung dieser Folie und ihre Verwendung, sowie aus der Folie hergestellte Kondensatoren.

Die Folie gemäß der Erfindung zeichnet sich durch ihre Hydrolysebeständigkeit, eine geringe Abgasentwicklung beim Erhitzen und eine hohe Durchschlagfestigkeit aus. Ferner lässt sie sich wirtschaftlich herstellen und eignet sich zur Herstellung von elektrisch stabilen Kondensatoren, welche ebenfalls hydrolysebeständig sind. Ferner eignet sie sich zur Herstellung von hydrolysebeständigen SMD- Kondensatoren. Ein solcher Kondensator, oft als Entstörkondensator eingesetzt, benötigt keine Box, bietet somit den Vorteil eines besonders geringen Platzbedarfes und weist eine längere Lebensdauer auf als Kondensatoren aus unstabilisierten Thermoplasten.

Des weiteren kann die Folie gemäß der Erfindung auch ohne Verlust ihrer Eigenschaften vor ihrer Beschichtung, d.h. vor der Kondensatorherstellung, rezykliert werden. Das Regenerat kann somit wieder in den Herstellungsprozess der Folie eingesetzt werden.

Eine hohe Durchschlagfestigkeit bedeutet, dass die Durchschlagsfestigkeit (AC) der Folie, gemessen nach DIN 53481 nach der Kugel/Platte-Methode bei Wechselspannung, einen Wert von ≥ 190 kV/mm, vorzugsweise ≥240 kV/mm und insbesondere ≥280 kV/mm aufweist.

Der Ausdruck "elektrisch stabile Kondensatoren" bedeutet, dass die mit den Hydrolysestabilisatoren ausgerüsteten Kondensatoren eine deutlich verlängerte Lebensdauer besitzen und keine hohen Ausfallraten in der Praxis aufweisen, verglichen mit nicht hydrolysestabil ausgerüsteten Kondensatoren.

Die Folie enthält als Hauptbestandteil einen Thermoplasten. Geeignet sind beispielsweise Polyethylenterephthalat (PET), Polyethylennaphthalat (PEN), Polybutylenterephthalat (PBT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus, wobei PET, PEN und PETBB bevorzugt sind.

Zur Herstellung der Thermoplaste können neben den Hauptmonomeren wie Dimethylterephthalat (DMT), Ethylenglycol (EG), Propylenglycol (PG), 1,4-Butandiol, Terephthalsäure (TA), Benzoldicarbonsäure und/oder 2,6-Naphthalindicarbonsäure (NDA), auch Isophthalsäure (IPA), trans- und/oder cis-1,4-Cyclohexandimethanol (c-CHDM, t-CHDM oder c/t-CHDM) und andere geeignete Dicarbonsäurekomponenten (oder Dicarbonsäureester) und Diolkomponenten verwendet werden.

Gemäß der Erfindung versteht man unter Thermoplasten
- Homopolymere,
- Copolymere,
- Compounds,
- Recyklat und
- andere Variationen von Thermoplasten.

Bevorzugt sind hierbei Polymere, bei denen die Dicarbonsäurekomponente zu 95 % und mehr, insbesondere zu 98 % und mehr aus TA oder NDA besteht. Bevorzugt sind weiterhin Thermoplaste, bei denen die Diolkomponente zu 90 %und mehr, insbesondere zu 93 % und mehr aus EG besteht. Bevorzugt sind auch Polymere bei denen der Diethylenglykolanteil am Gesamtpolymer im Bereich 1 von 2 % liegt. Bei allen vorgenannten Mengenangaben bleibt der Hydrolysestabilisator unberücksichtigt.

Die Folie gemäß der Erfindung enthält weiterhin anorganische oder organische Verbindungen, die zur Einstellung der Oberflächentopographie benötigt werden. Eine zu hohe Rauheit (Rₐ-Wert) beeinträchtigt jedoch die elektrische Ausbeute in der Kondensatorfertigung. Daher hat es sich als zweckmäßig erwiesen, wenn die im folgenden beschriebenen Werte für die Rauheit eingestellt werden, die je nach Stärke der Folie unterschiedliche Werte haben können. Die Menge der eingesetzten Verbindungen ist abhängig von den verwendeten Substanzen und ihrer Partikelgröße. Letztere liegt im Bereich von 0,01 bis 10,0, vorzugsweise 0,1 bis 5,0 und insbesondere 0,3 bis 3,0 µm. Bei einer 3,6- 12,0 µm dicken Folie wird ein Rₐ-Wert von ≤150 nm und vorzugsweise von ≤100 nm angestrebt. Bei einer 2,4 - 3,5 µm dicken Folie liegt der Rₐ-Wert bei ≤ 100 nm und vorzugsweise bei ≤ 70 nm, während er bei Foliendicken unterhalb von 2,4 µm Werte von ≤ 70 nm und vorzugsweise von ≤ 50 nm aufweist.

Geeignete Verbindungen zur Erzielung der Rauheit sind z.B. Kalziumcarbonat, Apatit, Siliziumdioxyd, Titandioxyd, Aluminiumoxyd, vernetztes Polystyrol, Zeolithe und andere Silikate und Aluminiumsilikate. Diese Verbindungen werden im allgemeinen in Mengen von 0,05 bis 1,5 %, vorzugsweise 0,1 bis 0,6 %, eingesetzt. Durch einfache Mischversuche und anschließendes Messen der Rₐ-Werte lässt sich die Rauheit je nach eingesetzter Verbindung leicht bestimmen. Beispielsweise führt eine Kombination aus den Siliziumdioxidpigmenten 0,11 % ®Sylysia 320 (Fuji, Japan) und 0,3 % ®Aerosil TT600 (Degussa, Deutschland) bei einer 5 µm Folie zu einem Rₐ-Wert von 70 nm. Ebenso ergibt eine Folie mit der Dicke von 5 µm, die 0,6 % ®Omyalite (Kalziumkarbonat der Firma Omya, Schweiz) mit einer mittleren Partikelgröße von 1,2 µm enthält, einen Rₐ-Wert von 60 nm. Verwendet man dieselben Rezepturen zur Herstellung einer 1,4 µm dicken Folie, so erhält man einen Rₐ-Wert von 35 nm ± 5 nm.

Zum Erreichen der Durchschlagfestigkeit AC hat es sich als zweckmäßig erwiesen, wenn der Schmelzewiderstand des verwendeten Thermoplasts im Mittel einen Wert von ≥ 1 • 10⁷ Ωcm, vorzugsweise ≥ 10 • 10⁷ Ωcm und insbesondere ≥ 25 • 10⁷ Ωcm besitzt. Der Mittelwert wird berechnet nach der Formel

1 / (x₁ C 1 / W₁ + X₂ C 1 / W₂+ ..... +xₙ C 1 / Wₙ),

wobei
x₁ (xₙ) = Anteil der Thermoplastchips der Komponente 1 (n) und
W₁ (Wₙ) = Widerstand der Thermoplastchips der Komponente 1 (n) sind

Die Standardviskosität SV (DCE) der Folie, gemessen in Dichloressigsäure nach DIN 53728, liegt im allgemeinen im Bereich von 700 bis 1100, vorzugsweise von 800 bis 980.

Die Folie enthält weiterhin einen ausgasungsfesten Hydrolysestabilisator, der bevorzugt über die sogenannte Masterbatch-Technologie direkt bei der Folienherstellung zudosiert wird, wobei der Anteil des Hydrolysestabilisators im Bereich von 0,2 bis 10,0 Gew.-%, vorzugsweise von 1,0 bis 4,0 Gew.-%, bezogen auf das Gewicht des Thermoplasten, liegt. Im Masterbatch beträgt der Anteil des Hydrolysestabilisators allgemein 5,0 bis 60,0 Gew.-%, bevorzugt 10,0 bis 50,0 Gew.-%, jeweils bezogen auf das Gesamtgewicht des Masterbatches.

Geeignete Hydrolysestabilisatoren sind hierbei polymere Carbodiimide, die eine geringe Gasentwicklung aufweisen, z.B. Blockcopolymere auf Basis von Polycarbodiimiden der Formel (I)

X-[-(A)ₘ-(B)ₙ-]ₒ-X (I),

in der
X gleich oder verschieden und ausgewählt ist aus der Gruppe -NHCO-R, -NHCONH-R, -NHCOO-R, -HCOS-R, -COO-R, -O-R, -NR₂, -NHR und -NCO, wobei die Reste R einen Alkyl-, Cycloalkyl-, Aralkyl- oder Arylrest mit 1 bis 30 C-Atomen bedeuten,
m und n unabhängig voneinander eine ganze Zahl von 1 bis 1000 darstellt,
o eine ganze Zahl von 1 bis 500 ist,
A ausgewählt ist aus der Gruppe der Carbodiimide oder Polycarbodiimide der Formel (II)

- (-N=C=N-Y-)- (II),

in der
Y ausgewählt ist aus der Gruppe von ortho- oder bisortho-substituierten Aromaten, von Aralkylenen, in denen das mit der Carbodiimidgruppe verbundene C-Atom durch C₁-C₁₄-Alkylgruppen substituiert ist, und von Cycloalkylenen, in denen das mit der Carbodiimidgruppe verbundene C-Atom durch C₁-C₁₄-Alkylgruppen substituiert ist, und
B ausgewählt ist aus der Gruppe (Poly)Diole, (Poly)Diamine, (Poly)Dimerkaptane, (Poly)Aminoalkohole, (Poly)Aminomerkaptane und (Poly)Merkaptoalkohole.

Bevorzugt sind Blockcopolymere, in denen Y in der Formel (II) einen Block auf der Basis 2,4,6-Triisopropylphenyl-1,3-diisocyanat oder 3,3',5,5'-Tetraisopropyl-4,4'-diisocyanatodiphenylmethan bedeutet. Mischungen der genannten Verbindungen sind ebenfalls geeignet.

Geeignet sind auch polymere Carbodiimide der Formel (III) 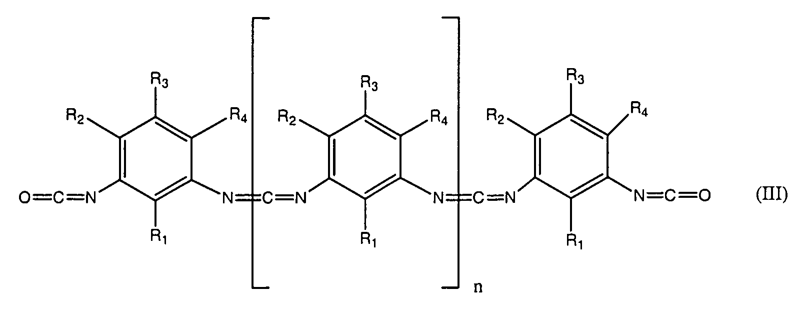 bei denen R₁, R₂ und R₄ gleich sind und einen Kohlenwasserstoffrest der Formel C_{P} H_{(2P+1)} darstellen, wobei p eine ganze Zahl ≥ 3, vorzugsweise ≥ 5, und n ≤ 12 bedeutet, sowie R₃ Wasserstoff ist.

Geeignet sind ferner solche Carbodiimide der Formel (III), deren Struktur auf Naphthalinringen beruht. Bei diesen Verbindungen wird für die Reste R₂ und R₃ bzw. für R₃ und R₄ über die Konfiguration (IV) 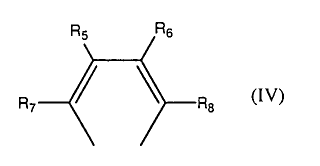 die Naphthalinstruktur aufgebaut,
wobei R₁ und R₄ bzw. R₁ und R₂ Wasserstoff sind.
R₅ bis R₈ können ebenfalls Wasserstoff oder Kohlenwasserstoffreste der Formel Cᵣ H ₍₂ᵣ₊₁₎ sein, wobei r ≤ 10 ist. Geeignet sind außerdem solche Verbindungen, in denen R₅ und R₆ gleich oder verschieden sind und einen Kohlenwasserstoffrest Cᵣ H _{(2r + 1)} darstellen, während die übrigen Reste Wasserstoff sind.

Der Hydrolysestabilisator wird vorzugsweise über die Masterbatch-Technologie zugegeben. Dazu wird er zunächst in einem Trägermaterial voll dispergiert. Als Trägermaterial kommen der Thermoplast selbst, z.B. das Polyethylenterephthalat oder auch andere Polymere, die mit dem Thermoplasten verträglich sind, in Frage. Nach der Zudosierung zu dem Thermoplasten für die Folienherstellung schmelzen die Bestandteile des Masterbatches während der Extrusion und werden so in dem Thermoplasten gelöst.

Die Herstellung des Masterbatch kann auch in-situ erfolgen, d.h. die Monomeren zur Herstellung des Thermoplast werden gemeinsam mit den weiteren Komponenten, z.B. den Hydrolysestabilisatoren und/oder den Verbindungen zur Erzielung der Rauheit vermischt und die erhaltenen Mischungen polykondensiert.

Es hat sich überraschenderweise gezeigt, dass sich die Stabilität der Kondensatoren - insbesondere gegen Temperaturschocks - bei Einsatz der ausgasungsfesten Hydrolysestabilisatoren gemäß der Erfindung wesentlich verbessert, wenn der Gewichtsverlust durch Abgasung äußerst gering ist, verglichen mit handelsüblichen Hydrolysestabilisatoren, z.B. P100 (Fa. Rheinchemie, Deutschland), unter den gleichen Testbedingungen. So ist es beispielsweise günstig, wenn er um 5 %, bevorzugt um 10 % und insbesondere um 20 % niedriger liegt als der Vergleich. Die Gasentwicklung wird dabei in Form des Gewichtsverlusts eines 15 %-igen Masterbatches des Hydrolysestabilisators (Gewichtsprozente) in PET (SV 750 - 830) bei einer Thermogravimetrieanalyse bis 230 °C angegeben (s. Messmethoden).

Die aus den Folien gemäß der Erfindung hergestellten Schichtkondensatoren weisen außerdem statistisch weniger Spalten auf als solche, die unter Verwendung handelsüblicher Stabilisatoren produziert wurden.

Neben den erwähnten Additiven kann die Folie zusätzlich weitere Komponenten wie Flammschutzmittel und/oder Radikalfänger und/oder andere Polymere wie Polyetherimide enthalten.

Zur wirtschaftlichen Herstellung zählt, dass die Rohstoffe beziehungsweise Rohstoffkomponenten, die zur Herstellung der Folie benötigt werden, mit handelsüblichen Industrietrocknern wie Vakuumtrocknern (d. h. unter vermindertem Druck), Wirbelschichttrocknern oder Festbetttrocknern (Schachttrockner) getrocknet werden können. Wesentlich ist, dass die erfindungsgemäß eingesetzten Rohstoffe nicht verkleben und nicht thermisch abgebaut werden. Die genannten Trockner arbeiten im allgemeinen bei normalen Druck mit Temperaturen zwischen 100 und 170 °C, wo nach dem Stand der Technik hydrolysestabil ausgerüstete Rohstoffe verkleben können und die Trockner und/oder Extruder zusetzen. Bei einem Vakuumtrockner, der die schonendsten Trockenbedingungen erlaubt, durchläuft der Rohstoff einen Temperaturbereich von ca. 30 °C bis 130 °C bei einem vermindertem Druck von 50 mbar. Auch bei diesen Trocknern mit Trocknungstemperaturen unter 130 °C werden in der Kondensatorfolienproduktion Nachtrockner (Hopper) mit Temperaturen oberhalb von 100 °C benötigt, bei denen entsprechend ausgerüstete Rohstoffe nach dem Stand der Technik dann verkleben können. Im allgemeinen ist ein Nachtrocknen in einem Hopper bei Temperaturen von 100 bis 130 °C und einer Verweilzeit von 3 bis 6 Stunden erforderlich.

Die Folie gemäß der Erfindung wird im allgemeinen nach an sich bekannten Extrusionsverfahren hergestellt.

Im Rahmen eines dieser Verfahren wird so vorgegangen, dass die entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert wird.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längs- und auch die Querstreckung bei TG + 10 °C bis TG + 60 °C (TG = Glastemperatur der Folie) durchgeführt. Das Längsstreckverhältnis liegt allgemein im Bereich von 2,0 : 1 bis 6,0 : 1, vorzugsweise von 3,0 : 1 bis 4,5 : 1. Das Querstreckverhältnis liegt allgemein im Bereich von 2,0 : 1 bis 5,0:1, vorzugsweise von 3,0 : 1 bis 4,5 : 1 und das der gegebenenfalls durchgeführten zweiten Längs- und Querstreckung liegt bei 1,1 : 1 bis 5,0 : 1.

Die erste Längsstreckung kann gegebenenfalls gleichzeitig mit der Querstreckung (Simultanstreckung) durchgeführt werden. Als besonders günstig hat es sich erwiesen, wenn das Streckverhältnis in Längs- und Querrichtung jeweils größer als 3,5 ist.

Bei der nachfolgenden Thermofixierung wird die Folie etwa 0,1 bis 10 s lang bei einer Temperatur von 180°C bis 260 °C, vorzugsweise 220 bis 245 °C gehalten. Anschließend an beziehungsweise beginnend in der Thermofixierung wird die Folie um 0 bis 15 %, vorzugsweise um 1,5 bis 8 % in Quer- und gegebenenfalls auch in Längsrichtung relaxiert und die Folie in üblicher Weise abgekühlt und aufgewickelt. Zur Herstellung von für SMD-Prozesse geeigneten Kondensatoren muss die Relaxierung mindestens 6 % betragen, und mindestens 2 % Relaxierung müssen bei Temperaturen unterhalb 190 °C stattfinden.

Die aufgewickelte Folie wird anschließend in konventionellen Metallisierungsmaschinen (z.B. von Fa. Applied Films vorm. Leybold) nach den bekannten Verfahren metallisiert (eine Beschichtung mit einem anderen leitfähigen Material wie leitfähigen Polymeren ist ebenfalls möglich) und in die gewünschte Breite zur Kondensatorherstellung konfektioniert. Aus diesen metallisierten Schmalschnitten werden Kondensatorwickel gefertigt, anschließend flachgepresst (Temperaturen zwischen 0 und 280 °C), schoopiert und kontaktiert.

Eine weitere Möglichkeit ist das Wickeln der Schmalschnitte auf Räder oder Stäbe, die schoopiert, im Ofen thermostabilisiert (Temperaturen zwischen 100 und 280 °C) und in die entsprechenden Kondensatorbreiten geschnitten werden (Schichtkondensatoren), welche dann abschließend kontaktiert werden. Das Tempern kann dabei gegebenenfalls auch vor dem Schoopen erfolgen.

Die Lebensdauer von Kondensatoren aus mit Hydrolysestabilisatoren ausgerüsteten Folien ist um mehr als den Faktor zwei gegenüber Kondensatoren mit herkömmlichen Folien erhöht. Überraschend ist dabei auch, dass die Lebensdauer der aus PEN-Folien mit Hydrolysestabilisator hergestellten Kondensatoren nochmals drastisch erhöht ist und im Bereich von Polyphenylensulfid (PPS)-basierten Kondensatoren liegt.

Besonders überraschend war auch die hohe Durchschlagfestigkeit der Folien gemäß der Erfindung und die sehr guten elektrischen Eigenschaften. Die Folien eignen sich daher besonders gut zur Herstellung von Kondensatoren, vorzugsweise Starterkondensatoren und SMD-lötfähigen Entstörkondensatoren. So zeigen diese Kondensatoren bei Durchgang von hohen Stromflüssen keine höheren Ausfallraten in der Spannungsprüfung und in ihrer Lebensdauer.

Überraschend war weiterhin, dass die elektrischen Eigenschaften, z.B. die Kapazitätsdrift, durch den Einsatz von den in der vorliegenden Erfindung verwendeten Hydrolysestabilisatoren gegenüber dem Stand der Technik nochmals verbessert werden konnten.

In den nachfolgenden Ausführungsbeispielen erfolgt die Messung der einzelnen Eigenschaften gemäß den angeführten Normen bzw. Verfahren.

### Messmethoden

### Standardviskosität (SV) und intrinsische Viskosität (IV)

Die Standardviskosität SV (DCE) wird, angelehnt an DIN 53726, bei 25 °C in Dichloressigsäure (DCE) gemessen. Die intrinsische Viskosität (IV) berechnet sich wie folgt aus der Standardviskosität ,

IV = [η] = 6,907 · 10⁻⁴ SV (DCE) + 0,063096 [dl/g]

### Rauheit

Die Rauheit Rₐ der Folie wird nach DIN 4768 bei einem Cut-off von 0,25 mm bestimmt.

### Elektrische Durchschlagfestigkeit

Die elektrische Durchschlagfestigkeit wird nach DIN 53481 bei Wechselspannung (50 Hz) als Mittelwert von 10 Messstellen angegeben.

### Spannungsprüfung

An 100 Exemplaren der gefertigten Kondensatoren wird eine Spannung für jeweils 2 Sekunden angelegt. Die Spannung richtet sich nach der Dicke der Einsatzfolie und berechnet sich nach Spannung in Volt = 69 • (Dicke in µm)^{1,3629}
Der Spannungstest gilt bei jedem Kondensator als bestanden, wenn die Spannung während der zwei Sekunden um nicht mehr als 10 % abnimmt. Der Gesamttest gilt als bestanden, wenn von den eingesetzten Kondensatoren höchstens 2 ausfallen.

### Lebensdauer

100 Kondensatoren werden bei 125°C für 500 Stunden in einem Autoklaven bei 50 % rel. Luftfeuchte gelagert und vor und nach dieser Zeit der Spannungsprüfung unterzogen. Der Test gilt als bestanden, wenn von den eingesetzten Kondensatoren, die eingangs den Spannungstest bestanden haben, nach der Temperung höchstens 2 ausfallen.

### Schmelzeleitfähigkeit / Schmelzewiderstand

15 g Rohstoff werden in ein Glasrohr verbracht und 2 Stunden bei 180 °C getrocknet. Das Rohr wird in ein 285 °C heißes Ölbad getaucht und evakuiert. Durch schrittweises Absenken des Drucks auf 0,1 • 10⁻² bar wird die Schmelze blasenfrei gemacht (entschäumt). Das Rohr wird anschließend mit Stickstoff geflutet und zwei auf 200 °C vorgeheizten Elektroden (zwei Platinbleche (Fläche = 1 cm²) im Abstand von 0,5 cm voneinander) langsam in die Schmelze eingetaucht. Nach 7 Minuten erfolgt bei 100 V Messspannung (High Resistance Meter 4329 A von Hewlett Packard) die Messung, wobei der Messwert zwei Sekunden nach dem Anlegen der Spannung genommen wird.

### Optische Beurteilung der Schnittkante auf Spalten

100 Kondensatoren mit bestandenem Spannungstest werden für 3 Minuten in einem Ofen mit 200 °C plaziert. Anschließend wird die Schnittkante mit dem Auge auf Spalten überprüft. Der Test gilt als gut bestanden, wenn bei weniger als 5 % der Kondensatoren sichtbare Spalten in der Schnittkante entstanden sind.

### Kapazitätsdrift

Die Kapazität von 100 Kondensatoren mit bestandenem Spannungstest wird gemessen und die Kondensatoren werden für 3 Minuten in einem Ofen mit 200 °C plaziert. Anschließend wird bei jedem Kondensator erneut die Kapazität bestimmt. Der Test gilt als bestanden, wenn bei weniger als 5 % der Kondensatoren eine Kapazitätsdrift (Betrag von Kapazität vor Test / Kapazität nach Test • 100) ein nicht akzeptabler Wert von mehr als 7 % auftritt.

### Thermogravimetrie

Je 15 mg Masterbatch von 15 % Gewichtsprozent Hydrolysestabilisator in PET oder PEN oder entsprechendem oben beschriebenen Polyesterrohstoff sowie 15 g Masterbach mit Hydrolysestabilisator P100 (Rheinchemie) als Vergleich im sonst identischen Polyesterrohstoff werden 24 h in einem Trockenschrank bei 60 % relativer Luftfeuchte und 25 °C konditioniert. Anschließend werden beide Proben in einem TGA-Gerät (TGA7 der Firma Perkin Elmer) vermessen. Als Gas wird Luft mit einer Gasgeschwindigkeit von 20 ml/min verwendet. Die Proben werden zuerst innerhalb von 2 Minuten von Raumtemperatur auf 100 °C aufgeheizt. Sie werden anschließend 10 Minuten bei 100 °C gehalten. Das nach diesen 12 min gemessenen Gewicht wird als 100 % gesetzt. Danach beginnt die eigentliche Messung. Es wird mit einer Heizrate von 10 K/min auf 200 °C erwärmt, 10 Minuten isotherm bei dieser Temperatur gehalten und anschließend mit einer Heizrate von 10 K/min auf 230 °C erwärmt und dort isotherm für 10 Minuten gehalten und der Gewichtsverlust abgelesen.

### Beispiele

Bei nachstehenden Beispielen und den Vergleichsbeispielen handelt es sich jeweils um Folien unterschiedlicher Dicke, die nach einem bekannten Extrusionsverfahren hergestellt wurden. Aus den erhaltenen Folien wurden jeweils Kondensatoren gefertigt.

### Folienherstellung

Thermoplast-Chips wurden gemäß den in den Beispielen angegebenen Verhältnissen gemischt und in einem Wirbelschichttrockner bei 155 °C für 1 Minute vorkristallisiert, anschließend für 3 Stunden in einem Schachttrockner bei 150 °C getrocknet und bei 290 °C extrudiert. Das geschmolzene Polymer wurde aus einer Düse über eine Abzugswalze abgezogen. Der Film wurde um den Faktor 3,8 in Maschinenrichtung bei 116 °C gestreckt und in einem Rahmen bei 110 °C eine Querstreckung um den Faktor 3,7 durchgeführt. Anschließend wurde die Folie bei 235 °C thermofixiert und in Querrichtung erstmals um 5 % bei Temperaturen von 220 - 190 °C und anschließend nochmals um 2 % bei 190 - 150°C relaxiert.

### Kondensatorherstellung

Die Folie wurde jeweils mit einer ca. 500 Ångstrøm dicken Aluminiumschicht bedampft, wobei mittels Abdeckbändern ein unmetallisierter Streifen von 2 mm Breite zwischen je 18 mm breiten, metallisierten Streifen erzeugt und die Folie anschließend in 10 mm breite Streifen geschnitten wurde, so dass am Rand der 1 mm breite, unmetallisierte Streifen (Freirand) verblieb. Zwei je 600 Meter lange Streifen, einer mit dem Freirand auf der linken Seite und einer mit dem Freirand auf der rechten Seite, wurden gemeinsam auf ein Metallrad mit 20 cm Durchmesser aufgewickelt. Dabei hatten die beiden Streifen einen Versatz von 0,5 mm in der Breitenrichtung. Oberhalb und unterhalb der metallisierten Streifen wurden je 10 Lagen unmetallisierte Folie aufgewickelt. Über der obersten Lage wurde ein Metallband mit einem Druck von 0,1 kg/cm² festgezogen. Der Wickel auf dem Rad wurde anschließend auf beiden Seiten schoopiert, mit einer 0,2 mm dicken Silberschicht bedampft und bei 195 °C für 60 Minuten im Ofen (geflutet mit trockenem Stickstoff) getempert. Von dem Wickelrad wurde anschließend das Metallband entfernt und dann im Abstand von 0,7 cm in einzelne Kondensatoren geschnitten.

Carbodiimid -Synthesen
a) 293,0 g (1,03 mol) 2,4,6-Triisopropylphenyl-1,3-diisocyanat mit einem NCO-Gehalt von 29,5 Gew.-% wurden in Gegenwart von 0,2 Gew.-% (0,59 g) 1-Methylphospholen-1-oxid in 200 ml wasserfreiem Xylol auf 100 °C erhitzt und bei dieser Temperatur unter CO₂-Entwicklung kondensiert. Nach Erreichen eines NCO-Gehaltes der Reaktionsmischung von 5,0 Gew.-%, Reaktionszeit ca, 11 Stunden, wurden das Lösemittel, Restmonomere und Katalysatorreste unter vermindertem Druck abdestilliert.
   Ausbeute: 270,2 g einer Mischung aus oligomeren Polycarbodiimiden mit einem NCO-Gehalt von 7,0 Gew.-% und einem Carbodiimid-Gehalt von 12,6 Gew.-%.
b) 500 g (1,2 mol) 3,3',5,5'-Tetraisopropyl-4,4'-diisocyanatodiphenylmethan mit einem NCO-Gehalt von 19,3 Gew.-% wurden in Gegenwart von 0,2 Gew.-% 1-Methylphospholen-1-oxid in 500 ml wasserfreiem Xylol auf 120 °C erhitzt und bei dieser Temperatur unter CO₂-Entwicklung kondensiert. Nach Erreichen eines NCO-Gehaltes der Reaktionsmischung von 2,9 Gew.-%, Reaktionszeit ca, 10 Stunden, wurden das Lösemittel, Restmonomere und Katalysatorreste unter vermindertem Druck abdestilliert.
   Ausbeute: 280 g einer Mischung aus oligomeren Polycarbodiimiden mit einem NCO-Gehalt von 2,3 Gew.-%, einem Carbodiimid-Gehalt von 9,4 Gew.-%, einem Glaspunkt von 58 °C und einer mittleren Molmasse von 3200 g/mol, gemessen mittels Gelpermeationschromatographie.

### Blockcopolymer-Synthesen

A) 85 g des oligomeren Polycarbodiimides aus a) wurden in 100 ml wasserfreies Toluol gegeben und unter Stickstoff bei 60 °C für 10 Minuten gerührt.. Anschließend wurden 16,3 g (0,14 mol) pulverisiertes 2,2-Bis-(4-hydroxyphenyl)-propan portionsweise zugesetzt und dann 1,5 g Katalysator - als 33%-ige Lösung von Triethylendiamin in Dipropylenglykol - zugegeben. DerAnsatz wurde für 12 Stunden unter Rückfluss gekocht und anschließend das Lösungsmittel unter vermindertem Druck abdestilliert.
   Ausbeute: 93 g eines spröden Pulvers mit einem NCO-Gehalt von 0 %, einem Carbodiimid -Gehalt von 10,6 Gew.-%, einem Glaspunkt von 75,2 °C und einem mittleren Molgewicht von 5300 g/mol.
B) 100 g des oligomeren Polycarbodiimides aus b) wurden in 100 ml wasserfreies Toluol gegeben und unter Stickstoff bei 60 °C für 10 Minuten gerührt. Dann wurden 29,4 g Desmophen 1600 u, ein linearer Polyester der Fa. Bayer AG, mit einer Hydroxylzahl von 110,3 mg KOH/g und eine Viskosität von 220 mPas, gemessen bei 23 °C, und 0,3 g des Katalysators Dibutylzinndilaurat zugegeben, die Reaktionsmischung für 3 Stunden bei 80 °C gerührt und das Lösungsmittel unter vermindertem Druck abdestilliert.
   Ausbeute: 77,4 g eines spröden, bernsteinfarbigen Blockcopolymeren mit einem NCO-Gehalt von 0 %, einem Carbodiimid -Gehalt von 7,3 Gew.-%, einem Glaspunkt von 36,3 °C

### Verwendete Rohstoffe

- Rohstoff R1: PET (Typ M 03, KoSa), SV-Wert 820
- Rohstoff R2: PEN, SV-Wert 900
- Masterbatch MB1: 15,0 Gew.-% Stabilisator P100 und 85,0 Gew.% PET, SV-Wert 860
- Masterbatch MB2: 1,0 Gew.-% Sylysia 320, 3,0 % Gew.-% Aerosil TT600 und 96,0 Gew.-% PET, SV-Wert 800
- Masterbatch MB3: 15,0 Gew.-% Blockcopolymer A) und 85,0 Gew.% PEN, SV-Wert 900
- Masterbatch MB4: 1,0 Gew.-% Sylysia 320, 3,0 Gew.-% Aerosil TT600 und 96,0 Gew.-% PEN, SV-Wert 900
- Masterbatch MB5: 15,0 Gew.-% Blockcopolymer B) und 85,0 Gew.% PET, SV-Wert 860

Der Schmelzewiderstand der eingesetzten Rohstoffe lag im Bereich von 25 • 10⁷ bis 30 • 10⁷ Ωcm.

Das Masterbatch 1 weist nach TGA-Analyse einen Gewichtsverlust von 0,17 %, das Masterbatch 3 einen Gewichtsverlust von 0,05 % und Masterbatch 5 einen Gewichtsverlust von 0,1 % auf.

| Beispiel | Foliendicke (µm) | Zusammensetzung |
|---|---|---|
| 1 | 2,0 | 11,0 Gew.-% MB2, 10,0 Gew.-% MB5 und 79,0 Gew.-% |
| | | R1 |
| 2 | 6,0 | 8,0 Gew.-% MB2, 10,0 Gew.-% MB5 und 82,0 Gew.-% |
| | | R1 |
| 3 | 6,0 | 8,0 Gew.-% MB4,10,0 Gew.-% MB3 und 82,0 Gew.-% |
| | | R2, Extrusionstemperatur 305°C, Streckungen bei |
| | | 141°C |

| Vergleichsbeispiele | | |
|---|---|---|
| VB1 | 2,0 | 11,0 Gew.-% MB2 und 89,0 Gew.-% R1 |
| VB2 | 6,0 | 8,0 Gew.-% MB2 und 92,0 Gew.-% R1 |
| VB3 | 2,0 | 11,0 Gew.-% MB2, 10,0 Gew.-% MB1 und 79,0 |
| | | Gew.-% R1 |
| VB4 | 6,0 | 8,0 Gew.-% MB2, 10,0 Gew.-% MB1 und 82,0 Gew.-% |
| | | R1 |

Die Eigenschaften der hergestellten Folien sind aus der nachstehenden Tabelle zu entnehmen.

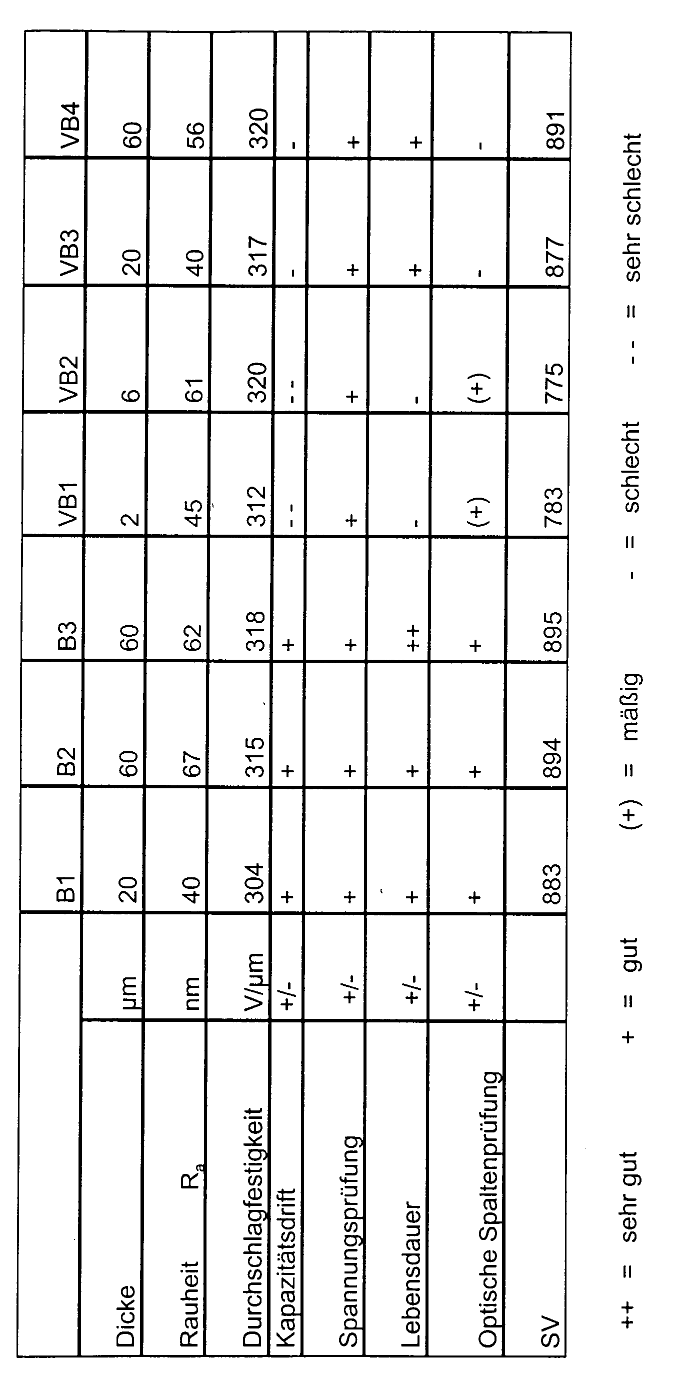

## Patentansprüche

1. Biaxial orientierte, hydrolysebeständige Folie, die als Hauptbestandteil einen Thermoplasten enthält und eine Dicke im Bereich von 0,5 bis 12,0 µm aufweist, **dadurch gekennzeichnet, dass** die Folie eine elektrische Durchschlagfestigkeit AC von ≥ 190 kV/mm und eine Rauheit Rₐ von ≤150 nm besitzt und mindestens einen ausgasungsfesten Hydrolysestabilisator enthält.

2. Folie nach Anspruch 1, **dadurch gekennzeichnet, dass** der Thermoplast ein Polyethylenterephthalat, Polybutylenterephthalat, Polyethylennaphthalat, bibenzolmodifiziertes Polyethylenterephthalat oder Mischungen daraus, vorzugsweise Polyethylenterephthalat, Polyethylennaphthalat oder bibenzolmodifiziertes Polyethylenterephthalat ist.

3. Folie nach Anspruch 1 oder 2, **dadurch gekennzeichnet, dass** die Konzentration des Hydrolysestabilisators im Bereich von 0,2 Gew.-% bis 10,0 Gew.-%, vorzugsweise von 1,0 bis 4,0 Gew.-%, bezogen auf das Gewicht des Thermoplasten, liegt.

4. Folie nach einem oder mehreren der Ansprüche 1 bis 3, **dadurch gekennzeichnet, dass** als Hydrolysestabilisator Blockcopolymere auf Basis von Polycarbodiimiden der Formel (I)
X-[-(A)ₘ-(B)ₙ-]ₒ-X (I),
in der
X gleich oder verschieden und ausgewählt ist aus der Gruppe -NHCO-R, -NHCONH-R, -NHCOO-R, -HCOS-R, -COO-R, -O-R, -NR₂, -NHR und -NCO, wobei die Reste R einen Alkyl-, Cycloalkyl-, Aralkyl- oder Arylrest mit 1 bis 30 C-Atomen bedeuten,
m und n unabhängig voneinander eine ganze Zahl von 1 bis 1000 darstellt,
o eine ganze Zahl von 1 bis 500 ist,
A ausgewählt ist aus der Gruppe der Carbodiimide oder Polycarbodiimide der Formel (II)
- (-N=C=N-Y-)- (II),
in der
Y ausgewählt ist aus der Gruppe von ortho- oder bisortho-substituierten Aromaten, von Aralkylenen, in denen das mit der Carbodiimidgruppe verbundene C-Atom durch C₁-C₁₄-Alkylgruppen substituiert ist, und von Cycloalkylenen, in denen das mit der Carbodiimidgruppe verbundene C-Atom durch C₁-C₁₄-Alkylgruppen substituiert ist, und
B ausgewählt ist aus der Gruppe (Poly)Diole, (Poly)Diamine, (Poly)Dimerkaptane, (Poly)Aminoalkohole, (Poly)Aminomerkaptane und (Poly)Merkaptoalkohole,
vorzugsweise Blockcopolymere, in denen Y in der Formel (II) einen Block auf der Basis 2,4,6-Triisopropylphenyl-1,3-diisocyanat oder 3,3',5,5'-Tetraisopropyl-4,4'-diisocyanatodiphenylmethan bedeutet, enthalten sind.

5. Folie nach einem oder mehreren der Ansprüche 1 bis 4, **dadurch gekennzeichnet, dass** sie einen dielektrischen Verlustfaktor Tangens delta bei 1 kHz und 30 °C von ≤ 0,0075 und einen Tangens delta bei 1 kHz und 120 °C von ≤ 0,3 besitzt.

6. Verfahren zur Herstellung einer biaxial orientierten, hydrolysebeständigen Folie, die als Hauptbestandteil einen Thermoplasten enthält und eine Dicke im Bereich von 0,5 bis 12 µm aufweist, **dadurch gekennzeichnet, dass** ein Thermoplast und ein ausgasungsfester Hydrolysestabilisator nach einem Extrusionsverfahren zu einem flachen Schmelzefilm ausgeformt, mit Hilfe einer Kühlwalze abgeschreckt und die so erhaltene weitgehend amorphe Folie zur Verfestigung auf einer oder mehreren Walze/n abgezogen wird, die Folie anschließend biaxial gestreckt (orientiert) und die biaxial gestreckte Folie thermofixiert und mit einer leitfähigen Beschichtung versehen wird.

7. Verfahren nach Anspruch 6, **dadurch gekennzeichnet, dass** der Hydrolysestabilisator, der vorzugsweise über die Masterbatch-Technologie zugeben wird, im Masterbatch neben dem Thermoplast in Mengen von 5,0 bis 60,0 Gew.-%, bevorzugt 10,0 bis 50,0 Gew.-%, jeweils bezogen auf das Gesamtgewicht des Masterbatches eingesetzt wird.

8. Verwendung der Folie nach einem oder mehreren der Ansprüche 1 bis 5 zur Herstellung von Kondensatoren.

9. Verwendung nach Anspruch 8 in Starter-und Entstörkondensatoren.

10. Verwendung nach Anspruch 8 oder 9, wobei der Kondensator ein SMDfähiger Kondensator ist.

11. Starterkondensator, hergestellt unter Verwendung der Folie nach einem oder mehreren der Ansprüche 1 bis 5.
